# EUROPÄISCHE PATENTSCHRIFT

(11) **EP 3 213 571 B1**
(45) Veröffentlichungstag und Bekanntmachung des Hinweises auf die Patenterteilung: **24.02.2021**
(21) Anmeldenummer: 15749760.3
(22) Anmeldetag: 03.08.2015
(51) Int. Cl.: H04W 4/06, H04L 29/08, H04W 28/16, H04N 21/258, H04L 29/06, H04W 8/00, H04W 64/00, H04N 21/61, H04N 21/6405, H04N 21/6408

(54) **VERFAHREN ZUR ÜBERMITTLUNG VON DATENSÄTZEN AN MOBILE ENDGERÄTE**
METHOD FOR TRANSMISSION OF DATA RECORDS TO MOBILE TERMINALS
MÉTHODE DE TRANSMISSION DE ENREGISTREMENTS DE DONNÉES À TERMINAUX MOBILES

(30) Priorität: 28.10.2014 DE 102014221958
(43) Veröffentlichungstag der Anmeldung: 06.09.2017
(73) Patentinhaber: Bayerische Motoren Werke Aktiengesellschaft, 80809 München (DE)
(72) Erfinder: GOZALVEZ SERRANO, David, 80636 München (DE); LOTTERMANN, Christian, 80687 München (DE)
(86) Internationale Anmeldenummer: PCT/EP2015/067798
(87) Internationale Veröffentlichungsnummer: WO 2016/066292

(56) Entgegenhaltungen:
- US-A1- 2004 073 924
- US-A1- 2013 051 331

## Beschreibung

### Gebiet der Erfindung

Die Erfindung betrifft ein Verfahren zur Übermittlung von Datensätzen an mobile Endgeräte, die über ein Funknetzwerk mit einem an ein Datennetzwerk angeschlossenen Datenserver verbunden sind, mittels dessen die Datensätze über das Funknetzwerk an die in einer Funkzelle des Funknetzwerks befindlichen Endgeräte als Broadcastsignal oder wahlweise als ein an ein oder mehrere dieser Endgeräte spezifisch gerichtetes Individualsignal übermittelbar sind,
wobei ein in die Funkzelle ausgesandtes Gesamtsignal einen entsprechenden Broadcastsignalteil und einen entsprechenden Individualsignalteil enthält,
umfassend die Schritte:
a) Identifizieren der innerhalb der Funkzelle befindlichen Endgeräte durch den Datenserver,
b) Ermitteln eines bevorzugten Broadcastsignalteilfaktors für das Gesamtsignal durch den Datenserver auf Basis eines von den innerhalb der Funkzelle identifizierten Endgeräten angeforderten Datenbedarfs,
c) Übermitteln eines ersten Anteils der Datensätze im Broadcastsignalteil des Gesamtsignals und eines zweiten Anteils der Datensätze im Individualsignalteil des Gesamtsignals vom Datenserver an die Endgeräte, wobei der Broadcastsignalteil des an die Endgeräte übermittelten Gesamtsignals auf Basis des ermittelten, bevorzugten Broadcastsignalteilfaktors bestimmt wird.

### Stand der Technik

Ein derartiges Verfahren ist aus der US 2013/0051331 A1 bekannt.

In dem bekannten Verfahren übermittelt ein Datenserver Datensätze über ein LTE-Netzwerk (Long Term Evolution-Netzwerk) an mobile Endgeräte, wie beispielsweise Smart-Phones oder Laptops, unter Verwendung eines EMBMS-Protokolls (Evolved Multimedia Broadcast Multicast Service-Protokoll). Beim EMBMS erfolgt die Datenübermittlung durch ein Zeit-Multiplex-Verfahren, bei dem ein Broadcast- und ein Unicast-Signal im selben Frequenzkanal aber in unterschiedlichen Zeitabschnitten übermittelt werden.

Im bekannten Verfahren werden durch Verwendung des EMBMS-Protokolls die Datensätze über ein Gesamtsignal, das sich aus einem Broadcastsignalteil und einem Unicastsignalteil zusammensetzt, an die mit einer Basisstation des LTE Netzwerks verbundenen Endgeräte übermittelt. Der Datenserver ermittelt zu diesem Zweck einen bevorzugten Broadcastsignalteilfaktor für das ausgesandte Gesamtsignal. Unter Broadcastsignalteilfaktor ist im Rahmen der vorliegenden Beschreibung derjenige zeitliche Anteil am Gesamtsignal zu verstehen, der günstigerweise auf die Sendung von Datensätzen als Broadcastsignal zu verwenden ist. Typischerweise wird hierfür derjenige Anteil bestimmt, der nicht benötigt wird, um Datensätze zu versenden, die zwingend als Individualsignal versendet werden müssen. Im bekannten Verfahren berücksichtigt der Datenserver für die Ermittlung des bevorzugten Broadcastsignalteilfaktors die von den Endgeräten angeforderten Inhalte und insbesondere, wie viele Endgeräte einen identischen, per Broadcast übermittelbaren, Inhalt angefordert haben. Durch Übermittlung identischer Inhalte über den Broadcastsignalteil des Gesamtsignals müssen die entsprechenden Endgeräte nicht mehr über den Unicastsignalteil angesprochen werden, sodass die insgesamt nur begrenzt zur Verfügung stehende Sendekapazität der Basisstation effizient genutzt werden kann. Der Datenserver stimmt auf Basis des ermittelten, bevorzugten Broadcastsignalteilfaktors den Anteil des Broadcastsignalteils im Gesamtsignal ab, d.h. er weist dem Broadcastsignalteil die entsprechenden Zeitabschnitte für die Übermittlung im Frequenzkanal zu.

Bekanntermaßen kann bei einer Broadcastübertragung zu einem bestimmten Zeitpunkt lediglich ein einzelner, gemeinsamer Inhalt zeitgleich an die entsprechenden Endgeräte übertragen werden, wohingegen im Rahmen der Unicastübertragung unterschiedliche Inhalte an unterschiedliche Endgeräte übermittelt werden können. Hierdurch ist das bekannte Verfahren insbesondere in Situationen, in denen zeitgleich viele unterschiedliche Inhalte von den Endgeräten angefordert werden, stark limitiert. In einem solchen Szenario sind nur wenige der zu übertragenden Inhalte identisch, sodass folglich auch nur ein entsprechend kleiner Teil über den Broadcastsignalteil des Gesamtsignals übertragen werden kann. Ein Großteil der Inhalte muss somit also zwangsläufig im Unicastsignalteil übertragen werden, was jedoch auf Grund der nur begrenzt zur Verfügung stehenden Gesamtsendekapazität des Funknetzwerks häufig nicht gewährleistet werden kann. Ein Teil der Endgeräte, der idealerweise über den Unicastsignalteil mit Inhalten versorgt werden müsste, muss daher bei Überschreiten der verfügbaren Gesamtsendekapazität zwangsweise auch über den Broadcastsignalteil des Gesamtsignals angesprochen werden. Hierdurch werden die Benutzer dieser Endgeräte jedoch mit Inhalten versorgt, die unter Umständen nicht ihren Interessen entsprechen.

Aus der oben genannten gattungsbildenden Druckschrift ist außerdem bekannt, dass bei der Ermittlung des bevorzugten Broadcastsignalfaktors auch die Gesamtanzahl der mit einer Basisstation des Funknetzwerks verbundenen Endgeräte berücksichtigt werden kann. Auf diese Weise können z.B. Funkzellen des Funknetzwerks identifiziert werden, in denen die Gesamtsendekapazität mit hoher Wahrscheinlichkeit überschritten wird und in denen daher eine Versorgung von Endgeräten über den Broadcastsignalteil besonders sinnvoll ist. Eine Abstimmung der über den Broadcastsignalteil übermittelten Inhalte auf die Interessen der entsprechenden Benutzer ist hierdurch aber ebenfalls nicht möglich.

Aus der US 2004/073924 A1 ist ein TV-Broadcastverfahren bekannt, bei dem jedem Teilnehmer ein Benutzerprofil zugeordnet ist und die über den Broadcast an eine Gruppe von Teilnehmern ausgestrahlten Inhalte in Abhängigkeit von den in den Benutzerprofilen hinterlegten Informationen zusammengestellt werden. Bei diesem Verfahren sind die Positionen der stationären Endgeräte der Teilnehmer bereits in den Benutzerprofilen hinterlegt. Diese Möglichkeit besteht jedoch bei einem Verfahren zur Übermittlung von Datensätzen an mobile Endgeräte naturgemäß nicht.

In dem aus der oben genannten gattungsbildenden Druckschrift bekannten Verfahren kann die Position der Endgeräte vom Datenserver nur dann erfasst werden, wenn die Endgeräte eine Verbindung zum Datenserver aufbauen. Gerade dies ist aber nicht möglich, wenn die Gesamtsendekapazität einer Funkzelle bereits überschritten wurde. In einem solchen Szenario können die Endgeräte von Benutzern, die neu in eine derartige Funkzelle eintreten, keine Verbindung zum Datenserver aufbauen, sodass dieser die über den Broadcastsignalteil übermittelten Inhalte auch nicht auf die Interessen dieser Benutzer abstimmen kann.

### Aufgabenstellung

Es ist die Aufgabe der vorliegenden Erfindung, ein gattungsgemäßes Verfahren derart weiterzubilden, dass die über den Broadcastsignalteil übermittelten Inhalte besser den Interessen der jeweiligen Benutzer der innerhalb der Funkzelle befindlichen Endgeräte entsprechen.

### Darlegung der Erfindung

Diese Aufgabe wird in Verbindung mit den Merkmalen des Oberbegriffs von Anspruch 1 dadurch gelöst, dass den in der Funkzelle identifizierten Endgeräten jeweils ein Benutzerprofil zugeordnet ist, der Inhalt der im Broadcastsignalteil übermittelten Datensätze in Abhängigkeit von den in den Benutzerprofilen hinterlegten Informationen zusammengestellt wird und die innerhalb der Funkzelle befindlichen Endgeräte durch ein vom Funknetzwerk unabhängiges Erkennungssystem erkannt werden, mittels dessen eine Erkennungsinformation über die innerhalb der Funkzelle befindlichen Endgeräte an den Datenserver übermittelt wird, sodass die innerhalb der Funkzelle befindlichen Endgeräte durch diesen identifizierbar sind.

Bevorzugte Ausführungsformen sind Gegenstand der abhängigen Ansprüche.

Das erfindungsgemäße Verfahren ermöglicht es damit, den über den Broadcastsignalteil übermittelten Inhalt in Abhängigkeit von den in den Benutzerprofilen hinterlegten Informationen variabel zusammenzustellen. Hierdurch kann im Vergleich zum aus dem Stand der Technik bekannten Verfahren eine größere Anzahl an Benutzern über den Broadcastsignalteil mit für sie relevanten Inhalten versorgt werden. Der Datenserver identifiziert hierzu, beispielsweise über die IP-Adressen, die innerhalb einer Funkzelle des Funknetzwerks befindlichen Endgeräte und stellt den über den Broadcastsignalteil des Gesamtsignals übermittelten Inhalt entsprechend den Interessen der jeweiligen Benutzer zusammen. Hierdurch kann allen Benutzern, insbesondere auch bei nicht ausreichend zur Verfügung stehender Gesamtsendekapazität des Funknetzwerks, ein ihren Interessen entsprechender Inhalt zur Verfügung gestellt werden.

Erfindungsgemäß ist vorgesehen, dass die innerhalb der Funkzelle befindlichen Endgeräte durch ein vom Funknetzwerk unabhängiges Erkennungssystem erkannt werden, mittels dessen eine Erkennungsinformation über die innerhalb der Funkzelle befindlichen Endgeräte an den Datenserver übermittelt wird, sodass die innerhalb der Funkzelle befindlichen Endgeräte durch diesen identifizierbar sind. Hierdurch können auch wenn die Sendekapazität der Funkzelle nicht mehr ausreicht, um alle in der Funkzelle befindlichen Endgerät über ihre IP-Adresse zu identifizieren, diese weiterhin durch den Datenserver identifiziert werden. In einem solchen Fall kann beispielsweise ein Fahrzeug - repräsentativ für die in ihm realisierte Femtozelle bzw. die damit verbundenen Endgeräte -, das neu in eine derartige Funkzelle eintritt, in vorteilhafter Weise durch ein vom Funknetzwerk unabhängiges GPS-System identifiziert werden, das dann den Datenserver über den Eintritt des Fahrzeugs in die Funkzelle informiert. Auf diese Weise kann durch den Datenserver das Fahrzeug identifiziert werden und ein entsprechend zugeordnetes Benutzerprofil bei der Zusammenstellung des über den Broadcastsignalteil in die Funkzelle übermittelten Inhalts entsprechend berücksichtigt werden. Die den in einer Funkzelle identifizierten Endgeräten, wie Smartphones oder Laptops, zugeordneten Benutzerprofile kann der Datenserver dabei auf unterschiedliche Weise beziehen.

Bei einer alternativen Ausführungsform des erfindungsgemäßen Verfahrens ist vorgesehen, dass die Benutzerprofile vom Datenserver über das angeschlossene Datennetzwerk bezogen werden. Der Datenserver kann also beispielsweise die Benutzerprofile über das Internet von Drittanbietern, wie beispielsweise Facebook, google, oder last.fm beziehen. Die hierfür benötigten Zugangsdaten kann er beispielsweise über ein Unicastsignal von den Endgeräten abrufen. Die Zugangsdaten können hierfür z.B. vom Benutzer zuvor am Endgerät eingegeben oder aber in diesem gespeichert worden sein. Selbstverständlich ist es auch möglich, dass die einmal über das Datennetzwerk bezogenen Benutzerprofile für die zukünftige Verwendung vom Datenserver gespeichert werden.

Bei einer bevorzugten Ausführungsform des erfindungsgemäßen Verfahrens ist vorgesehen, dass die Benutzerprofile vom Datenserver erstellt werden. Hierdurch kann auf die Zugangsdaten des Benutzers vollständig verzichtet werden. Der Datenserver kann beispielsweise über die ihm bekannten IP-Adressen und die von den jeweiligen Endgeräten angeforderten Inhalte ein jedem Endgerät entsprechend zugeordnetes Benutzerprofil erstellen.

Weitere Merkmale und Vorteile der Erfindung ergeben sich aus der nachfolgenden speziellen Beschreibung und den Zeichnungen.

### Kurzbeschreibung der Zeichnung

Es zeigt:

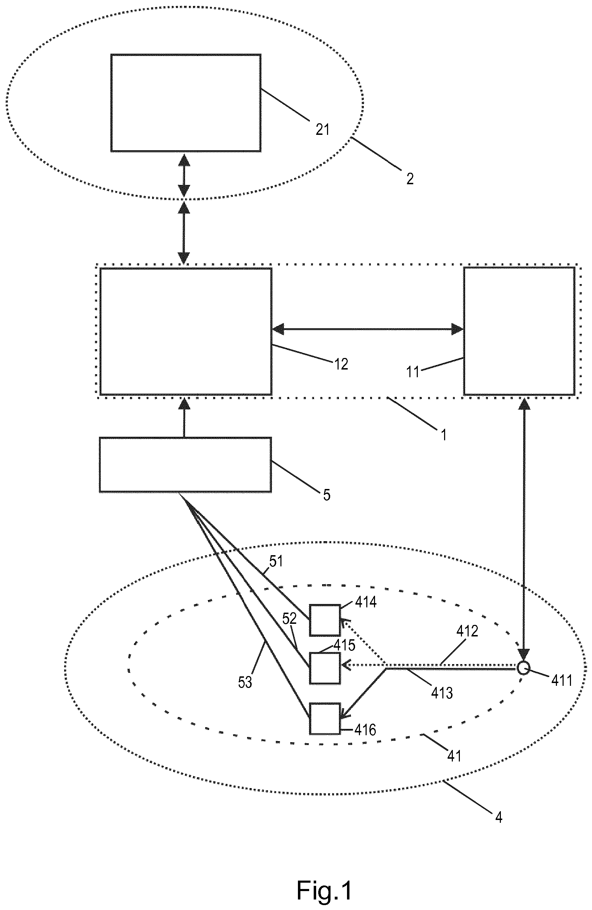

- Figur 1:: Eine Illustration einer Ausführungsform des erfindungsgemäßen Verfahrens.

### Beschreibung bevorzugter Ausführungsformen

Figur 1 zeigt eine Illustration einer Ausführungsform des erfindungsgemäßen Verfahrens. In Figur 1 ist ein Datenserver 1 zu sehen, der aus einem Broadcast-Multicast-Service-Center (BM-SC) 11 und einem Inhaltsserver 12 aufgebaut ist. Der Inhaltsserver 12 ist dabei an ein Datennetzwerk 2 angeschlossen, über das er mit einem Drittanbieter 21 verbunden ist. In Figur 1 ist außerdem dargestellt, dass das BM-SC 11 über eine Basisstation 411 einer Funkzelle 41 ein aus einem Broadcastsignalteil 412 und einem Individualsignalteil 413 aufgebautes Gesamtsignal in die Funkzelle 41 aussendet, das unter Verwendung eines EMBMS (evolved multimedia broadcast multicast Service)-Protokolls erzeugt worden ist. Der Broadcastsignalteil 412 des Gesamtsignals wird dabei an die Endgeräte 414, 415, der Individualsignalteil 413 an das Endgerät 416 übermittelt. Der Individualsignalteil 413 ist in dem in Figur 1 dargestellten Ausführungsbeispiel ein Unicastsignalteil. In Figur 1 ist außerdem dargestellt, dass ein Erkennungssystem 5 die Endgeräte 414, 415, 416, über GPS-Signale 51, 52, 52 innerhalb der Funkzelle 41 des LTE-Funknetzwerks 4 erkennt und eine Erkennungsinformation an den Inhaltsserver 12 übermittelt. Der Inhaltsserver 12 identifiziert mittels der Erkennungsinformation die Endgeräte 414, 415 und 416 und erkennt, dass diese sich in der Funkzelle 41 befinden. Der Inhaltsserver 12 bezieht die den Endgeräten 414, 415 und 416 zugeordneten Benutzerprofile vom Drittanbieter 21. Auf Basis der in den Benutzerprofilen hinterlegten Informationen stellt der Inhaltsserver in dem in Figur 1 dargestellten Ausführungsbeispiel fest, dass die den Endgeräten 414 und 415 zugeordneten Benutzer einen ähnlichen Musikgeschmack haben, und ermittelt in Abstimmung mit dem BM-SC 11, dem über die Basisstation 441 bekannt ist, dass das Endgerät 416 einen E-Mail-Datensatz angefordert hat, der lediglich im Unicastsignalteil 413 des Gesamtsignals übertragen werden kann, einen bevorzugten Broadcastsignalteilfaktor. In dem in Figur 1 dargestellten Ausführungsbeispiel bestimmen der Inhaltsserver 12 und das BM-SC 11 als Broadcastsignalteilfaktor diejenigen Zeitabschnitte des Gesamtsignals, die neben der für die Übermittlung des E-Mail-Datensatzes zwingend erforderlichen Zeitabschnitte noch für eine Broadcastübertragung zur Verfügung stehen. Der Inhaltsserver 12 stellt daraufhin Musik-Datensätze, deren Inhalt dem Musikgeschmack der Benutzer der Endgeräte 414 und 415 entsprechen und die in den ermittelten, noch zur Verfügung stehenden Zeitabschnitten an die Endgeräte 414 und 415 übertragen werden können, zusammen. Die zusammengestellten Datensätze überträgt der Inhaltsserver 12 an das BM-SC 11, das diese im Broadcastsignalteil 412 des Gesamtsignals, der durch die noch für die Broadcastübertragung zur Verfügung stehenden Zeitabschnitte bestimmt wird, an die Endgeräte 414 und 415 übermittelt. Gleichzeitig übermittelt das BM-SC 11 im Individualsignalteil 413 des Gesamtsignals den ebenfalls vom Inhaltsserver 12 zuvor übertragenden E-Mail-Datensatz an das Endgerät 416.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Beispielsweise muss der Individualsignalteil des Gesamtsignals nicht zwingend ein Unicastsignalteil sein. Vielmehr kann jedes spezifisch an ein oder mehrere Endgeräte gerichtetes Individualsignal hierfür eingesetzt werden. Der Individualsignalteil kann also insbesondere auch ein Multicastsignalteil sein, mit dem eine spezifische Gruppe von Endgeräte über ihre IP-Adressen angesprochen und zeitgleich mit einem einzelnen, gemeinsamen Inhalt versorgt werden kann. Das erfindungsgemäße Verfahren kann durch unterschiedliche Ereignisse initiiert werden. Z.B. kann ein tatsächlicher Anstieg des Funkverkehrsaufkommens (traffic load) anhand der eingehenden Anforderungen detektiert werden. Möglich ist aber auch eine Antizipierung einer hohen traffic load auf Basis einer hohen Dichte von Mobilgeräten, die tatsächlich detektiert oder aus Kontextinformationen von Drittanbietern, z.B. aus Staumeldungen, abgeleitet wird. Auch eine solche Dichte von Mobilgeräten lässt sich ihrerseits aus historischen Daten antizipieren.

### Bezugszeichenliste

- 1: Datenserver
- 2: Datennetzwerk
- 4: Funknetzwerk
- 5: Erkennungssystem .
- 11: BM-SC
- 12: Inhaltsserver
- 21: Drittanbieter
- 41: Funkzelle
- 51, 52, 53: GPS-Signale
- 411: Basisstation
- 412: Broadcastsignalteil
- 413: Individualsignalteil
- 414,415,416: Endgeräte

## Patentansprüche

1. Verfahren zur Übermittlung von Datensätzen an mobile Endgeräte (414, 415, 416), die über ein Funknetzwerk (4) mit einem an ein Datennetzwerk (2) angeschlossenen Datenserver (1) verbunden sind, mittels dessen die Datensätze über das Funknetzwerk (4) an die in einer Funkzelle (41) des Funknetzwerks (4) befindlichen Endgeräte (414, 415, 416) als Broadcastsignal oder wahlweise als ein an ein oder mehrere dieser Endgeräte (414, 415, 416) spezifisch gerichtetes Individualsignal übermittelbar sind,
wobei ein in die Funkzelle (41) ausgesandtes Gesamtsignal einen entsprechenden Broadcastsignalteil (412) und einen entsprechenden Individualsignalteil (413) enthält,
umfassend die Schritte:
a) Identifizieren der innerhalb der Funkzelle (41) befindlichen Endgeräte (414, 415, 416) durch den Datenserver (1),
b) Ermitteln eines bevorzugten Broadcastsignalteilfaktors für das Gesamtsignal durch den Datenserver (1) auf Basis eines von den innerhalb der Funkzelle (41) identifizierten Endgeräten (414, 415, 416) angeforderten Datenbedarfs,
c) Übermitteln eines ersten Anteils der Datensätze im Broadcastsignalteil (412) des Gesamtsignals und eines zweiten Anteils der Datensätze im Individualsignalteil (413) des Gesamtsignals vom Datenserver (1) an die Endgeräte (414, 415, 416),
wobei der Broadcastsignalteil (412) des an die Endgeräte (414, 415, 416) übermittelten Gesamtsignals auf Basis des ermittelten, bevorzugten Broadcastsignalteilfaktors bestimmt wird,
**dadurch gekennzeichnet,**
**dass** den in der Funkzelle (41) identifizierten Endgeräten (414, 415, 416) jeweils ein Benutzerprofil zugeordnet ist, der Inhalt der im Broadcastsignalteil (412) übermittelten Datensätze in Abhängigkeit von den in den Benutzerprofilen hinterlegten Informationen zusammengestellt wird und die innerhalb der Funkzelle (41) befindlichen Endgeräte (414, 415, 416) durch ein vom Funknetzwerk (4) unabhängiges Erkennungssystem (5) erkannt werden, mittels dessen eine Erkennungsinformation über die innerhalb der Funkzelle (41) befindlichen Endgeräte (414, 415, 416) an den Datenserver (1) übermittelt wird, sodass die innerhalb der Funkzelle (41) befindlichen Endgeräte (414, 415, 416) durch diesen identifizierbar sind.

2. Verfahren nach Anspruch 1,
**dadurch gekennzeichnet,**
**dass** die Benutzerprofile vom Datenserver (1) über das Datennetzwerk (2) bezogen werden.

3. Verfahren nach Anspruch 1,
**dadurch gekennzeichnet,**
**dass** die Benutzerprofile vom Datenserver (1) erstellt werden.

## Claims

1. Method for transmitting data sets to mobile terminals (414, 415, 416) which are connected via a radio network (4) to a data server (1) connected to a data network (2), by means of which data server the data sets can be transmitted via the radio network (4) to the terminals (414, 415, 416) located in a radio cell (41) of the radio network (4) as broadcast signal or optionally as an individual signal specifically directed to one or more of these terminals (414, 415, 416),
wherein a total signal sent out to the radio cell (41) contains a corresponding broadcast signal part (412) and a corresponding individual signal part (413), comprising the steps:
a) identifying the terminals (414, 415, 416) located within the radio cell (41) by the data server (1),
b) determining a preferred broadcast signal part factor for the total signal by the data server (1) on the basis of a data requirement requested by the terminals (414, 415, 416) identified within the radio cell (41),
c) transmitting a first component of the data sets in the broadcast signal part (412) of the total signal and a second component of the data sets in the individual signal part (413) of the total signal from the data server (1) to the terminals (414, 415, 416),
wherein the broadcast signal part (412) of the total signal transmitted to the terminals (414, 415, 416) is determined on the basis of the determined preferred broadcast signal part factor,
**characterized in that**
the terminals (414, 415, 416) identified in the radio cell (41) are in each case allocated a user profile, the content of the data sets transmitted in the broadcast signal part (412) is assembled in dependence on the information deposited in the user profiles, and the terminals (414, 415, 416) located within the radio cell (41) are recognized by a recognition system (5) independent of the radio network (4), by means of which recognition system an item of recognition information about the terminals (414, 415, 416) located within the radio cell (41) is transmitted to the data server (1), so that the terminals (414, 415, 416) located within the radio cell (41) can be identified by said data server.

2. Method according to Claim 1, **characterized in that** the user profiles are obtained by the data server (1) via the data network (2).

3. Method according to Claim 1, **characterized in that** the user profiles are generated by the data server (1).

## Revendications

1. Procédé de transmission d'ensembles de données à des terminaux mobiles (414, 415, 416) qui sont reliés par le biais d'un réseau radio (4) à un serveur de données (1) qui est raccordé à un réseau de données (2) et au moyen duquel les ensembles de données peuvent être transmis par le biais du réseau radio (4) aux terminaux (414, 415, 416) situés dans une cellule radio (41) du réseau radio (4) en tant que signal de diffusion ou éventuellement en tant que signal individuel dirigé spécifiquement vers un ou plusieurs de ces terminaux (414, 415, 416),
un signal global transmis dans la cellule radio (41) contenant une partie de signal de diffusion correspondante (412) et une partie de signal individuel correspondante (413),
le procédé comprenant les étapes suivantes :
a) le serveur de données (1) identifie les terminaux (414, 415, 416) situés à l'intérieur de la cellule radio (41),
b) le serveur de données (1) détermine un facteur partiel de signal de diffusion préféré pour le signal global sur la base d'un besoin de données demandé par les terminaux (414, 415, 416) identifiés dans la cellule radio (41),
c) le serveur de données (1) transmet aux terminaux (414, 415, 416) une première partie des ensembles de données située dans la partie de signal de diffusion (412) du signal global et une deuxième partie des ensembles de données située dans la partie de signal individuel (413) du signal global,
la partie de signal de diffusion (412) du signal global transmis aux terminaux (414, 415, 416) étant déterminée sur la base du facteur partiel de signal de diffusion préféré déterminé,
**caractérisé en ce que**
chacun des terminaux (414, 415, 416) identifiés dans la cellule radio (41) est associé à un profil d'utilisateur, les contenus des ensembles de données transmis dans la partie de signal de diffusion (412) sont assemblés en fonction des informations stockées dans les profils d'utilisateur et les terminaux (414, 415, 416) situés à l'intérieur de la cellule radio (41) sont détectés par un système de détection (5) qui est indépendant du réseau radio (4) et au moyen duquel une information de détection relative aux terminaux (414, 415, 416) situés dans la cellule radio (41) est transmise au serveur de données (1) de sorte que les terminaux (414, 415, 416) situés à l'intérieur de la cellule radio (41) puissent être identifiés par celui-ci.

2. Procédé selon la revendication 1,
**caractérisé en ce que**
les profils d'utilisateurs sont obtenus à partir du serveur de données (1) par le biais du réseau de données (2).

3. Procédé selon la revendication 1,
**caractérisé en ce que**
les profils d'utilisateur sont créés par le serveur de données (1).
